(19) Europäisches Patentamt
European Patent Office
Office européen des brevets

(11) **EP 2 110 727 A2**

(12) **EUROPÄISCHE PATENTANMELDUNG**

(43) Veröffentlichungstag:
**21.10.2009 Patentblatt 2009/43**

(51) Int Cl.:
**G05B 19/42** (2006.01)

(21) Anmeldenummer: **09004511.3**

(22) Anmeldetag: **28.03.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **16.04.2008 DE 102008018962**

(71) Anmelder: **KUKA Roboter GmbH**
**86165 Augsburg (DE)**

(72) Erfinder:
• **Müller-Sommer, Martin**
**86167 Augsburg (DE)**
• **Weiß, Martin**
**86459 Margertshausen (DE)**

(74) Vertreter: **Lempert, Jost et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(54) **Verfahren zur Steuerung eines Roboters**

(57)     Die Erfindung betrifft ein Verfahren zum Ansteuern mindestens eines Roboters mittels eines Roboterprogramms, das mindestens einen Programmbefehl enthält, auf dessen Grundlage die Roboter von einer Steuerungsvorrichtung angesteuert werden.

Das Verfahren zeichnet sich dadurch aus, dass die Magnetanordnung einen Elektromagneten und eine Erregerstrom-Steuerung aufweist, die eine Stromspeisung des Elektromagneten in Abhängigkeit von wenigstens einer aus Achsstellung, Nutzlast und Armdimensionierung ausgewählten Größe vorsieht.

Fig. 1

EP 2 110 727 A2

## Beschreibung

Die Erfindung betrifft ein Verfahren zum Ansteuern mindestens eines Roboters mittels eines Roboterprogramms, das mindestens einen Programmbefehl enthält, auf dessen Grundlage die Roboter von einer Steuerungsvorrichtung angesteuert werden.

Robotersteuerungen bieten derzeit einen festen, nicht erweiterbaren Satz von Bewegungsfunktionen, wie z.B. PTP, LIN, CIRC, SPLINE und überschliffene Verbindungen. Bewegungen, die von diesen Typen abweichen, können in der Regel nicht geplant werden. Allerdings können Bewegungskorrekturen, wie Sensorkorrekturen, von einer externen Quelle in die Steuerung eingebracht werden. Weiterhin können bestimmte Bewegungsinformationen aufgezeichnet und steuerungsextern zur Verfügung gestellt werden, wie typischerweise die Aufzeichnung von steuerungsinternen oder mittels der Steuerung gemessenen Größen zur Diagnose eines Systems. Es ist allerdings bisher nicht möglich, die fraglichen Daten derart zusammenzuführen, dass der Roboter, sowie optional angeschlossene Peripheriegeräte anhand der vorhandenen Bewegungs- und/oder Systemzustandsdaten im Zeitraster des Ausführungs- bzw. Interpolationstaktes des Roboters angesteuert werden.

Insbesondere weisen die bisherigen Steuerungen von Robotern Nachteile auf, die durch die erfindungsgemäßen Lösungen beseitigt werden:

- Geometriedaten, die nicht im Format bzw. unter Verwendung von Planungsroutinen eines Steuerungsherstellers erstellt wurden, wie insbesondere CAD-Modelle, können nicht direkt zur Bewegungssteuerung verwendet werden. Statt dessen werden gewünschte Bahnen approximiert, indem aus CAD-Modellen Punkte auf oder in der Nähe der Wunschbahn erzeugt und diese durch Standard-Bewegungen der Steuerung verbunden werden. Dadurch wird im allgemeinen nicht exakt die Kontur des CAD-Modells als Bahn erzeugt. Auch ein gewünschtes Geschwindigkeits- und Orientierungsprofil kann nur approximativ erreicht werden, ebenso wie ein Kraftprofil, beispielsweise einer elektronischen Schweißzange mit Kraft- oder Momentenvorgabe. Letztendlich muss der Hersteller eines CAD-Systems bei der Generierung von Offline-Programmen die Planungsalgorithmen verschiedener Roboter-SteuerungsHersteller hinreichend genau kennen, ohne jedoch dadurch die in den CAD-Modellen vorhandene Präzision bei der Umsetzung bzw. Anwendung erreichen zu können.

- Bei der Generierung von Bahnen aus externen Quellen fallen mit steigender Genauigkeitsanforderung immer größere Datenmengen an. Beispielsweise wird zum hochgenauen Fräsen von Prototypen oder Rohlingen, z.B. für die Herstellung von Plastikflaschen, schichtenweise, in der Regel im Sub-Millimeter-Bereich und sehr langsam, Material von einem Ausgangskörper abgetragen. Um die geforderte Genauigkeit mit den in der Steuerung vorhandenen Befehlen zu erreichen, werden mehrere Megabyte an Punktdaten benötigt, die in der Regel nicht vollständig im Speicher der Steuerung gehalten werden können.

- Zugriffe auf Datenformate von Dritten erfordern neue Steuerungsversionen bei Änderungen im Datenformat. Wird, um die vorgenannten Nachteile auszugleichen, ein Verfahren

- z.B. eines CAD-Herstellers - zur Bahngenerierung in einer Robotersteuerung integriert, so können Änderungen in diesem Verfahren oder auch nur im Format der Datenbeschreibung zu diesem Verfahren nur dann in einer Roboteranlage eingesetzt werden, wenn dieses geänderte Verfahren in einer neuen Version der Steuerungssoftware in der entsprechenden Steuerungsvorrichtung installiert wird. Der Anwender bzw. Nutzer der Steuerung, die im allgemeinen vom Maschinen- bzw. Roboterhersteller bereitgestellt wird, ist dadurch von den Innovationszyklen des Steuerungsherstellers abhängig.

- Mittels innerhalb der Steuerungsvorrichtung vorhandenen Diagnosetool können derzeit die wichtigsten System- und Peripheriezustände, sowie Positionsdaten des Roboters und weiterer angesteuerter Achsen im Ausführungstakt der Steuerung aufgezeichnet werden. Diese aufgezeichneten Diagnosedaten können jedoch nicht zur Bewegungsführung verwendet werden! Oft besteht aber der Wunsch, nach Analyse der Diagnosedaten lediglich kleine Änderungen an diesen (aufgezeichneten) Daten vorzunehmen und dann diese Daten am Roboter nochmals gleichsam "abzuspielen". Dies gilt besonders dann, wenn komplexe Abläufe zu erstellen sind. Es ist dem Anwender häufig nicht klar, welcher Parameter für das letztendlich gewünschte Verhalten geändert werden muss. Dazu müssen die Daten so gespeichert werden, dass die Steuerungsvorrichtung anhand dieser Daten eine Rekonstruktion des Bewegungsablaufes möglich ist.

- Sensorkorrekturen können in der Regel nur online, aber nicht wiederholt mit einmalig beobachteten Werten, eingespeist werden. Prinzipiell können über eine Sensorschnittstelle freie Sollbahnen anstelle der üblichen Sollbahnen mit Sensor-Ist-Werten eingespeist werden. Sensordaten sind aber immer Echtzeitdaten. Werden über eine Sensorschnittstelle wiederholt feste Bewegungsdaten eingespeist, ist die Ausführung der Bewegungen daher mit erheblichen Einschränkungen verbunden. So ist ein Rückwärtsfahren nicht möglich, da diese Systemzeit dann ebenfalls "rückwärts" laufen müsste und ebenfalls sind Override-Regelungen und ein Überschleifen in andere Bewegungstypen nicht möglich. Auch kann die Geschwindigkeit in Test-Betriebsarten usw., die nach dem Stand der Technik als Override-Mechanismen realisiert werden, nicht reduziert werden. Weiterhin ist kein bahntreuer Not-Aus möglich, da die Steuerungsvorrichtung eine Sensorbahn als prinzipiell unbekannt behandeln muss.

- Robotersteuerungen arbeiten in der Regel nach interner (lokaler) Systemzeit. Dies bedeutet, dass eine Größe, die bei hundertprozentiger Ausführungsgeschwindigkeit der Programme der Echtzeit entspricht, bei geringerem Override in der Regel entsprechend langsamer wächst. Roboter werden aber zunehmend als Teil eines größeren automatisierungstechnischen oder anderen externen Systems eingesetzt, wobei das externe System die Zeit dem Roboter vorgibt. Dies entspricht in gewissen Situationen nicht der in der Robotersteuerung vorhandenen Echtzeit, die konstant in eine Richtung verläuft. Eine typische Anwendung ist die Produktion mit realer oder virtueller bzw. elektronischer Leitwelle, d.h. in dem ein an sich autonomer Industrieroboter durch eine elektronische Kopplung innerhalb eines größeren Systems zeitsynchron mit anderen Maschinen oder Robotern betrieben wird. Eine andere Anwendung ist ein Einsatz bei einem Fahrgerät, bei dem ein Roboter Menschen befördert und nach Art eines Flugsimulators optische und/oder akustische Signale parallel zur Bewegung des Roboters gezeigt werden, der Roboter aber nicht nach solchen selbst bewegt wird, sondern die Bewegung durch die dem Roboter zugehörigen Steuerungsvorrichtung programmiert ist. Der realistische Einsatz hängt dabei stark von der perfekten Synchronisation der Fahrgerätbewegung mit den Bild- und Tonsignalen ab. Auch können in einem Fahrgeschäft mehrere Roboter gleichzeitig betrieben werden, die entweder alle dieselbe oder unterschiedliche zyklische Bewegungen ausführen, und deren Bewegungen ständig mit Bild und Ton, der Position der Verfahreinheit sowie den anderen Robotern synchronisiert sein muss. Kooperieren beispielsweise zwei oder mehrere Roboter mit einer oder mehreren Maschinen, dürfen die beiden Roboter sich nicht mit ihren Armen gleichzeitig im gemeinsamen Arbeitsraum aufhalten. Auch darf kein Roboter sich bei einem Arbeitsschritt der Maschine, wie beim Umformen einer Presse, im Bereich derselben befinden. Die autonomen Steuerungen der Roboter und der Maschine müssen daher über Datenleitungen oder eine SPS synchronisiert werden. Dies erfordert Warteschleifen, die die Taktzeit negativ beeinflussen. Bei Inbetriebnahme oder nach Störungen der Anlage wird diese nicht programmgesteuert, sondern durch Handverfahren bewegt, d.h. durch Bewegungsbefehle, die der Bediener an einem Bediengerät eingibt. Dabei müssen die genannten Synchronisierungsbedingungen eingehalten werden, d.h. der Bediener müsste mehrere Steuerungen gleichzeitig bedienen.

Gewünscht ist das gleichzeitige synchrone Verfahren aller Einheiten.

Der Erfindung liegt daher die Aufgabe zugrunde, ein Verfahren zum Ansteuern mindestens eines Roboters zu schaffen, welche die Roboterprogrammerstellung für Anwender und Systempartner in flexibler Weise verbessert bzw. vereinfacht.

Erfindungsgemäß wird die genannte Aufgabe mit einem Verfahren der eingangs genannten Art gelöst, das dadurch gekennzeichnet ist, dass der Programmbefehl zur Interpretation eines frei definierbaren Bewegungsobjekts herangezogen wird und durch die Verwendung des Bewegungsobjektes die Roboterpositionen, sowie Peripherie- und Systemzustände inkl. weiterer ansteuerbarer Achsen in Abhängigkeit einer Leitgröße bestimmt wird.

Im Rahmen der Erfindung wird insbesondere ein Satz von Bewegungsobjekten in Form von abhängigen Größen als Funktion mindestens einer unabhängigen Größe und ein Treiber zur Verwaltung von Bewegungsobjekten erstellt bzw. geladen.

In bevorzugter Ausbildung sieht das erfindungsgemäße Verfahren vor, dass Maschinenposition, System- und/oder Peripheriezustände zum bestimmten Zeitpunkt abgefragt und an Variablen zugewiesen werden, wobei auch Bezugssysteme und/oder Lastdaten definiert und in einem Bewegungsobjekt gespeichert werden können.

Weiter können die Roboterpositionen, insbesondere die Systemzustände, Peripheriezustände und/oder Sensorsignal synchron zur Leitgröße der Steuerungsvorrichtung erfasst werden, welche vorzugsweise mit Hilfe einer Bibliothek durch Zugriffsfunktionen zum Wiederaufruf gespeichert wurden und werden. Dabei können die mit Hilfe einer Bibliothek von Zugriffsfunktionen aufgezeichnete Daten von Roboterpositionen, Systemzustände, Peripheriezustände und/oder Sensorsignal im Raster des Interpolationstaktes zur Optimierung Roboterprogramms editierbar werden.

Eine Weiterbildung sieht vor, dass die aufgezeichneten und/oder editierten Bewegungsobjekte des Roboterprogramms unter synchroner Wiederherstellung von externen Signalen und/oder Bewegungs-, System- und/oder Peripheriezuständen ausgeführt werden.

In bevorzugten Ausgestaltungen kann vorgesehen sein, dass die Roboterpositionen, Systemzustände, Peripheriezustände und/oder Sensorsignalen mit Hilfe einer Bibliothek von Zugriffsfunktionen zum Wiederaufruf gespeichert werden oder, dass als Leitgröße eine der Steuerung zugängliche Größe eines funktionellen Zusammenhangs für die Bewegungsführung, insbesondere eine mechanische oder elektronische Königswelle des Roboters oder einer Peripheriemaschine verwendet wird.

Weiter kann vorgesehen sein, dass Daten der Bewegungsobjekte in einer Tabelle gespeichert sind und erforderliche Zwischenwerte durch Interpolation gewonnen werden. Für Daten, die in funktionaler Form in dem Bewegungsobjekt gespeichert sind, erfolgt ein Aufruf einer entsprechenden Berechnungsvorschrift und deren Auswertung insbesondere mittels eines Compilers oder Interpreters der Steuerungsvorrichtung.

Weiter kann vorgesehen sein, dass Maschinenposition, System- und/oder Peripheriezustände zum bestimmten Zeitpunkt abgefragt und an Variablen zugewiesen werden.

Vor Durchführung einer Roboterbewegung wird zunächst die Startposition des Bewegungsobjekts abgefragt und der Roboter mit einer Punkt-zu-Punkt-Bewegung dorthin positioniert. In bevorzugter Ausgestaltung ist weiterhin vorgesehen, dass in jedem Interpolationstakt die der internen Systemzeit entsprechende Position aus dem Bewegungsobjekt gelesen und an eine Antriebseinheit der Maschine gesendet wird, wobei insbesondere beschreibbare System- und Peripheriezustände zyklisch, insbesondere im Interpolationstakt gelesen und gegebenenfalls, soweit zugelassen, wiederhergestellt werden. Schließlich erfolgt ein Peripheriezugriff nur, wenn sich der Peripheriezustand tatsächlich geändert hat.

Der Satz von Bewegungsobjekten in Form von abhängigen Größen als Funktion mindestens einer unabhängigen Größe beinhaltet eine funktionale Abhängigkeit von Zuständen repräsentierenden abhängigen Größen von mindestens einer unabhängigen Größe bevorzugt über eine bestimmte Zeitdauer, wobei der Satz von Bewegungsobjekten in Form von abstrakten Basis-Klassen von frei definierten Bewegungsobjekten definiert ist. In weiterer bevorzugter Ausgestaltung ist die erfindungsgemäße Einrichtung derart ausgebildet, dass eine Veränderung eines von einer Task verwendeten Bewegungsobjekts durch eine andere Task verhindert wird, z.B. eine Veränderung durch Aufzeichnung.

Durch das erfindungsgemäße Verfahren wird ein neues Steuerungs-Konzept geschaffen, das es gestattet, ein mittels eines steuerungsexternen Hilfsmittels oder eines mittels eines steuerungsinternen Aufzeichnungsmechanismus erzeugtes und gegebenenfalls modifiziertes beliebiges Bewegungsprofil, einschließlich zugehöriger Signalverläufe von steuerungsinternen und -externen Größen, im Rahmen eines eigenen, eventuell parametrierbaren Bewegungsbefehls unter Nutzung aller zugehörigen Möglichkeiten, wie Überwachungen, Triggern, Sensorkorrekturen, bahntreuen Not-Aus, Überschleifen etc., Rückwärtsausführen im Zeitraster des Interpolations- bzw. Ausführungstaktes der Systemzeit auszuführen. Dies beinhaltet insbesondere die Möglichkeit zur Aufzeichnung aller Bewegungsvorgänge, auch beim Handverfahren oder Programmverfahren im Zeitraster des Interpolations- bzw. Ausführungstaktes. Auch die Wiederherstellung bzw. Wiederholung der aufgezeichneten Bewegungsvorgänge ist im Zeitraster des Interpolations- bzw. Ausführungstaktes in exakt gleicher Form möglich. Durch die Erfindung wird weiterhin ermöglicht, ein über steuerungsexterne Hilfsmittel oder eines steuerungsinternen Aufzeichnungsmechanismus erzeugtes Bewegungsprofil im Zeitraster des Interpolationsbzw. Ausführungstaktes auszuführen. Der Interpolations- bzw. Ausführungstakt einer Systemzeit stellt eine bevorzugte Leitgröße dar, in deren Abhängigkeit die Bewegungsvorgänge ausgeführt werden können. Ein weiteres bevorzugtes Beispiel einer Leitgröße kann eine Winkelgröße sein, die von einer führenden (Master-) Automatisierungsanlage abgeleitet ist. Dies kann bspw. eine Presse sein, die einen Systemtakt vorgibt, an den sich beispielsweise pressenverkettende Roboter anpassen müssen. Ein solcher winkelabhängiger Systemtakt, der als eine externe Größe vorgegeben ist, wird auch als virtuelle bzw. elektronische Königswelle bezeichnet.

Die Erfindung gestattet darüber hinaus einem Dritten, wie einem externen Entwickler von CAD- oder Steuerungssoftware im Umfeld der Steuerungs- und Automatisierungstechnik eigene "Bewegungsbefehle" über eine flexible Schnittstelle in die Steuerung eines Roboterherstellers zu integrieren und dadurch unabhängig von den Entwicklungszyklen des Robotersteuerungsherstellers über eigene, eventuell parametrierbare Bewegungsbefehle Daten der Steuerung aufzuzeichnen bzw. in einem Systemtakt Bewegungen unter Nutzung von eigenen Bewegungsbefehlen und Datenstrukturen vorzugeben, ohne diese dem Robotersteuerungshersteller offen legen zu müssen.

Im Falle eines Standard-Sechs-Achs-Industrieroboters mit beispielsweise einem Greifer wird dargestellt, dass ein Bewegungsobjekt im Sinne der Erfindung eine Funktion enthalten kann:

$$F(t) = (A_i(t), \; i = 1 \ldots 6; \; G(t)), \; [t0, \; t1]$$

Der hierdurch beschriebene Prozess bzw. Bewegungsablauf dauert den Zeitraum von t0 bis t1 in irgendeiner Einheit, wie beispielsweise Sekunden. Zum Zeitpunkt t befinden sich die Achsen $A_i$ in den Positionen $A_i(t)$, wobei der Zustand des Greifers beschrieben wird durch eine Bool'sche Variable $G(t)$ mit $G(t)$ = true, falls der Greifer geschlossen und $G(t)$ = false, falls der Greifer offen ist. Die Variable t ist dabei in der Regel kontinuierlich. Da Steuerungen nach dem Stand der Technik allerdings Positionen nur zu diskreten Zeitpunkten verarbeiten, ist auch eine diskrete Interpretation möglich, d.h. F kann nur für gewisse Zeitpunkte definiert sein: t0, t0+$\Delta$, t0+2$\Delta$, ... t1, wobei $\Delta$ hier der Interpolationstakt der Steuerung ist. Die Funktion F kann um weitere Systemzustände erweitert werden, wie Synchronisationssignale mit anderen Steuerungen.

Ein solches Bewegungsobjekt kann alternativ oder zusätzlich eine Funktion enthalten, durch die eine Position des Greifers in kartesischen Koordinaten angegeben wird:

$$F(t)=(X(t), Y(t), Z(t), A(t), B(t), C(t), S(t), G(t)),$$

$$t[t0, t1]$$

wobei X, Y, Z die Position, A, B, C die Orientierung des Greifers in Euler-Winkeln bezeichnen und S eine Größe zur Auflösung von Mehrdeutigkeiten ist. Zur Definition kartesischer Koordinaten wird derart sowohl ein Bezugskoordinatensystem als auch die Geometrie des Werkzeugs durch je ein Koordinatensystem angegeben.

Das Bewegungsobjekt kann auch eine parametrierte Funktion enthalten, die z.B. in kompakterer Form den Verlauf kontinuierlicher Variablen als Polynom etwa dritten Grades $A_{j(t)}=A_{j0}+A_{j1}*t+A_{j2}*t^2+A_{j2}*t^2+A_{j3}*t^3$ beschreibt:

| Index j | Beginn Zeitintervall [sec] | Koeffizienten A1(t) [°] für Intervall j $a_{j0}, a_{11}, a_{12}, a_{13}$ | ... | Koeffizienten A6(t) [°] für Intervall j $a_{60}, a_{61}, a_{62}, a_{63}$ | G[°] |
|---|---|---|---|---|---|
| 1 | 0 | 0, 0.002, 0,0 | | 0, -0.001, 0,0 | true |
| 2 | 0.2 | 0.2 0.003, 0, 0.01 | | -0.2, -0.003, 0, 0 | true |
| ... | | | | | |

Alternativ oder zusätzlich kann das Bewegungsobjekt eine Tabelle enthalten, die zur Erzeugung des Bewegungsablaufs die Achsstellungen der Robotergelenke für jeden Zeittakt nominal vorgibt, wie:

| Index i | Zeit [sec] | A1[°] | A2[°] | A3[°] | A4[°] | A5[°] | A6[°] | G[°] |
|---|---|---|---|---|---|---|---|---|
| 1 | 0 | 0 | -90 | 90 | 0 | 0 | 0 | true |
| 2 | 0.002 | 0.1 | -90 | 90 | 0 | 0.01 | 0 | true |
| 3 | 0.004 | 0.1 | -90 | 90 | 0 | 0.02 | -0.01 | True |
| 4 | 0.006 | 0.1 | -90 | 90 | 0 | 0.03 | -0.02 | True |
| ... | | | | | | | | |

Grundsätzlich kann die Tabellenform auch als eine externe Darstellung in Form einer Datei ausgeführt sein:
A1 20, A2 -90, A3 90, A4 0, A5 0, A6 0, G true
A1 20, A2 -90, A3 90, A4 0, A5 1, A6 0, G true
A1 20, A2 -90, A3 90, A4 0, A5 2, A6 0, G true

Dabei kann ein und derselbe Bewegungsablauf je nach Bedarf des Anwenders durch unterschiedlich definierte Bewegungsobjekte beschrieben werden, nämlich so, dass die für den jeweiligen Anwendungsfall relevanten Größen in geeigneter Form enthalten sind. Eine Größe kann in verschiedenster Form im Bewegungsobjekt abgelegt werden, z.B. als Tabelle für diskrete Zeitpunkte, als parametrierte Funktion für kontinuierliche Zeitpunkte oder dergleichen. Eine gegebene interne Repräsentation eines Bewegungsobjekts kann verschiedene externe Darstellungen besitzen, z.B. Bezeichnungskonventionen verschiedener CAD-Systeme oder Steuerungstypen.

Das Verhalten der Standard-Bewegungsbefehle einer Robotersteuerung (also Geometrie- und Profilplanung, z.B. Linear-, Kreis-, PTP-, Spline-Bewegung, überschliffene Verbindungen dieser Bewegungen) kann ebenfalls in ein Bewegungsobjekt aufgenommen werden.

Die erfindungsgemäße Einrichtung kann eine Schnittstelle umfassen, insbesondere nach der folgenden Spezifikation:

Es ist ein Satz von Funktionen zum Lesen und Setzen von Bewegungs-System- und Peripheriezuständen in Form von Konstanten sowie Strukturen und Namen von Zugriffsfunktionen zur Beschreibung von Bewegungsdaten in einer Definitionsdatei vereinbart. Vorzugsweise umfassen diese Funktionen das Lesen und Setzen der aktuellen Roboterposition (kartesisch und oder achsspezifisch), sowie aller anderen von der Steuerungsvorrichtung unterstützten synchronen Achsen. Die Eigenschaften der von einer solchen Schnittstelle verwalteten Bewegungsobjekte werden in einer Datei beschrieben.

Das beschriebene Bewegungsobjekt besitzt einen Namen. Die Robotersteuerung kann die Bewegungs-, System- und Peripheriezustände des Bewegungsobjekts zu einem gewissen Zeitpunkt sowohl auslesen als auch setzen. Dazu sind programmierte Methoden vorgesehen, die zum Laden, Speichern und

Aufzeichnen von Bewegungsobjekten dienen. In einer Zustandsbeschreibung ist die aktuelle Verwendungsweise gekennzeichnet und dient dazu, in der Multitasking-Umgebung einer Robotersteuerung zu Verhindern, dass ein Bewegungsobjekt von einer Task durch Aufzeichnen verändert wird, obwohl es von einer anderen Task wiedergegeben wird. Eine abstrakte Basisklasse von Bewegungsobjekten kann im Sinne der objektorientierten Programmierung definiert sein, d.h. es gibt keine Objekte einer solchen Klasse, sondern erst eine konkrete Realisierung bzw. Implementierung definiert deren Bedeutung. Es ist z.B. auch zulässig, dass zu gewissen abgeleiteten Klassen von Bewegungsobjekten keine Möglichkeiten zum Laden bzw. Speichern auf externen Speichern implementiert ist oder dass keine Möglichkeit zum Aufzeichnen von Bewegungsobjekten gegeben ist.

Weitere Methoden dienen zum Auslesen von Positionen, wie System- und Peripheriedaten aus dem Bewegungsobjekt zu einem gewissen Zeitpunkt und setzen die gelesenen Werte in die Steuerung. Bei System- und Peripheriezuständen ist es vorteilhaft, nur diejenigen Größen, die geschrieben werden können, also etwa nur Ausgänge, nicht aber Eingänge zu setzen. Sie implementieren so den oben erklärten funktionalen Zusammenhang in Abhängigkeit von der Systemzeit.

Bei Bewegungsobjekten, die Daten in Form einer Tabelle speichern, wird in vorteilhafter Weise für Werte, die nicht den diskreten Zeitwerten in der Tabelle entsprechen, durch Interpolation ein geeigneter Zwischenwert gewonnen.

Eine Robotersteuerung kann im Rahmen des Verfahrens mittels einer Schnittstelle auf die Bewegungsobjekte zugreifen, die aus einer Abfolge von Steuerungskommandos der erfindungsgemäß (erweiterten) Roboterprogrammiersprache zusammengestellt sein können und in Abhängigkeit einer Leitgröße, wie etwa einer Systemzeit oder auch einer extern in die Robotersteuerung eingespeisten Leitgröße, wie beispielsweise eines Bewegungswinkels der Antriebswelle einer Presse dargestellt sind. Die Bewegungsobjekte enthalten z.B. frei definierbare Bewegungsprofile, insbesondere zur aktiven Steuerung des Bewegungsverlaufs eines Roboters und aller weiteren synchronen Achsen und optional zugehörige abhängige System- und Peripheriezustände. Diese abhängigen Größen, welche die Zustände des Roboters charakterisieren, können zum einen Bewegungszustände, wie Achswinkel und -Positionen, kartesische Position eines Endeffektors und zum anderen interne Systemzustände sowie Peripheriezustände der Robotersteuerung sein. Systemzustände beinhalten dabei Werkzeugdaten, Koordinatensysteme, Lastdaten, Variablen der Roboterprogrammiersprache, interne Zustände der Steuerung wie Bewegungstypen, Zeitinformationen usw. Peripheriezustände umfassen Ein- und Ausgänge, Hardware-Signale, Kräfte und Momente im Robotersystem bzw. am Werkzeug und/oder Werkstück sowie sonstige Sensorinformationen.

Zu den abhängigen Größen eines Bewegungsobjekts gehören auch abgeleitete oder zusammengefasste Eigenschaften des Bewegungssystem- und Peripheriezustands auf höherer Ebene, wie z.B. haptische Eindrücke, die aus - mittels geeigneter Sensoren erfassten - Kraft-Momenten-Signalen gebildet werden. Ein Bewegungsobjekt beinhaltet also im Rahmen der Erfindung eine Funktion der abhängigen Größen von einer unabhängigen Größe, wie der Zeit, einer Position, wie der einer Königswelle/Leitwelle oder dergleichen, die als Argument den Zugriff auf die Funktion erlauben.

Einzelbewegungsanweisungen können nach Art eines Video- bzw. Makrorekorders in das Bewegungsobjekt aufgezeichnet werden. Aufgezeichnete Bewegungsobjekte können analog zu Programmdateien kopiert, editiert, modifiziert und abgespeichert werden. Das Abarbeiten der zusammengestellten Einzelbewegungsanweisungen erfolgt durch Aufruf des Bewegungsobjekts. Die Einzelbewegungsanweisungen werden dabei in Abhängigkeit der Leitgröße, wie beispielsweise der Systemzeit oder einer positionsabhängigen Größe, wie dem Winkel einer Antriebs oder Abtriebswelle abgearbeitet.

Ein weiterer Vorteil der Erfindung liegt darin, dass eine standardisierte Schnittstelle vorgesehen werden kann, die in der Ausprägung durch Veröffentlichung der Schnittstellenspezifikationen offengelegt werden kann. So kann nicht nur der Hersteller der Robotersteuerung, sondern auch Drittanbieter können Treiber für die Bewegungsobjekte erstellen. Eine Formatänderung in einem Schnittstellentreiber des Drittanbieters, etwa von einer ersten zu einer zweiten Version erfordert dann nur die Erstellung eines weiteren Schnittstellen-Moduls. Sowohl die erste Version als auch die zweite Version kann mit beliebigen Steuerungsversionen der Robotersteuerung kombiniert werden, da die Spezifikation der Schnittstelle festgelegt ist. Auch können verschiedene Versionen von Schnittstellen verwendet werden, sobald der Hersteller der Robotersteuerung Änderungen in der Steuerungsversion vornimmt, zumindest solange diese die Schnittstellen-Spezifikation nicht selbst verändert wird. Änderungen der Schnittstellen-Spezifikation durch den Hersteller der Robotersteuerung sind weiterhin möglich, erfordern dann aber die Neuerstellung eines weiteren Objektmoduls. Dies ist mit logistischem Aufwand verbunden, da die neuen Schnittstellenspezifikation allen potentiellen Drittanbietern mitgeteilt werden muss, etwa in Form neuer Dateien, die mit einer neuen Steuerungsversion mitgeliefert werden. Diese Lösung ist durchaus akzeptabel, weil Drittanbieter nach Veröffentlichung einer neuen Steuerungsversion selbständig ihre Schnittstellenmodule anpassen können und nicht bereits bei der Entwicklung der neuen Steuerungsversion beteiligt werden müssen.

Dadurch werden Entwicklungszyklen von Steuerungshersteller und Fremdanbieter entkoppelt.

Weitere Vorteile und Merkmale der Erfindung ergeben sich aus den Ansprüchen und aus der nachfolgenden Beschreibung, in der bevorzugte Ausführungsbeispiele unter Bezugnahme auf die Zeichnungen im Einzelnen erläutert sind. Damit zeigt:

Fig. 1    eine schematische Darstellung einer Anlage mit einer Presse und zwei zugeordneten Robotern;

Fig. 2    die Struktur einer erfindungsgemäß ausgebildeten Steuerung mit einer Schnittstelle für Bewegungsobjekte;

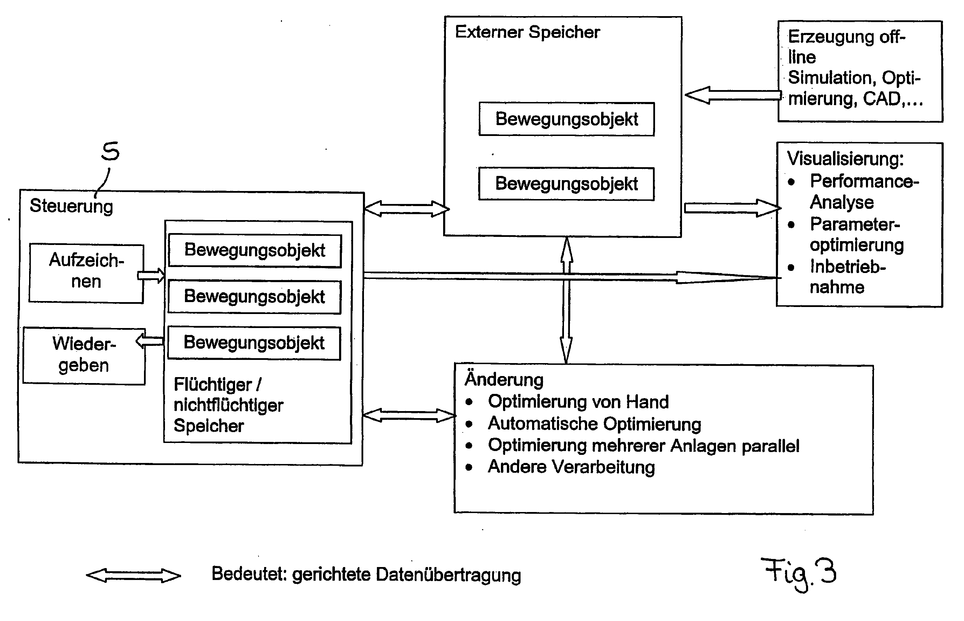

Fig. 3    die Abbildung der Prozess-Struktur zur Verwaltung von freien Bewegungsobjekten gemäß der Erfindung;

Fig. 4    eine schematische Darstellung einer Schnittstelle zur Verwaltung von freien Bewegungsobjekten;

Fig. 5    eine Strukturdarstellung zur Durchführung von Auszeichnungsoperationen gemäß der Erfindung;

Fig. 6    ein Flussdiagram zur Durchführung von Aufzeichnungsoperationen;

Fig. 7    ein Strukturdiagram für Wiedergabeoperationen; und

Fig. 8    ein Flussdiagram zur Durchführung von Wiedergabeoptionen.

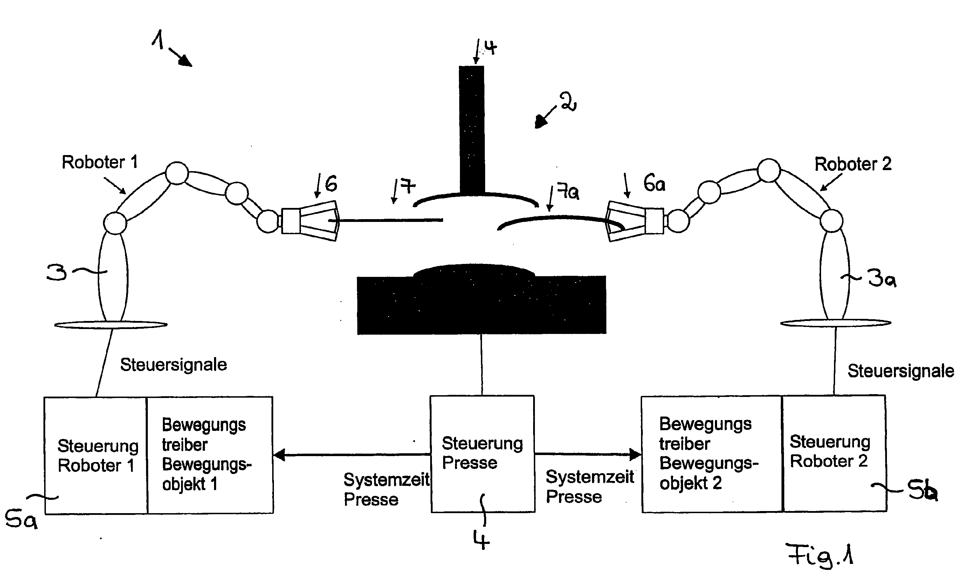

Die Fig. 1 zeigt eine Automatisierungsanlage 1 mit einer Presse 2 und zwei dieser zugeordneten Robotern 3, 3a. Die Presse 2 weist eine Pressensteuerung 4 und die Roboter 3, 3a weisen Robotersteuerungen 5, 5a auf. Der Roboter 3 führt der Presse 2 über seinen Greifer 6 ein ebenes Rohblech 7 zu, das in der Presse zu einem Formteil 7a geformt und vom Roboter 3a mittels dessen Greifer 6a ergriffen und aus der Presse 2 entnommen wird. In dieser Ausprägung wird die Bewegungsführung der Roboter durch ein Roboterprogramm ausgeführt, das mindestens ein Bewegungsobjekt enthält. Die zur Presse synchronen zyklischen Bewegungen der beiden Roboter 3 und 3a müssen auch über das Bewegungsobjekt aufrechterhalten werden. Dazu wird das Bewegungsobjekt in Abhängigkeit einer Leitgröße der Pressensteuerung ausgeführt. In diesem Falle kann die Leitgröße der Pressensteuerung als Winkel einer elektronischen Königswelle verstanden werden, der für das Bewegungsobjekt den Ausführungstakt der im Bewegungsobjekt enthaltenen Einzelbewegungsanweisungen für die Roboter synchron zur Pressensteuerung bzw. deren Systemzeit ausführt.

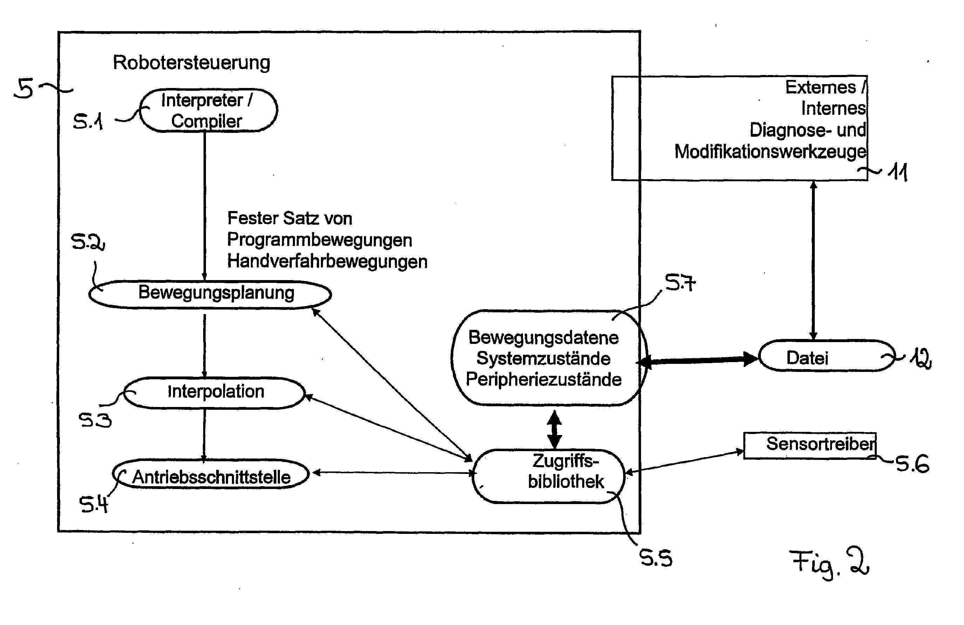

Die Fig. 2 zeigt die grundsätzliche Struktur einer erfindungsgemäß ausgebildeten Robotersteuerung 5, 5a (dargestellt am Beispiel der Robotersteuerung 5). Die Robotersteuerung 5 weist in bekannter Weise einen Interpreter oder Compiler 5.1 auf, durch den ein fester Satz von Programm- und/oder Handverfahrbefehlen einer Bewegungsplanung interpretiert wird. Die Steuerung 5 weist weiterhin einen Interpolator 5.3 auf, der die Programm- und/oder Handverfahrbefehle in Antriebssignale für eine Antriebsschnittstelle 5.4 umsetzt. Über eine Zugriffsbibliothek 5.5 können die in der Bewegungsplanung 5.2 enthaltenen Bewegungsobjekte ausgelesen werden. Dazu wird über die Zugriffsbibliothek 5.5 auf eine dem Bewegungsobjekt zugeordnete Datei 12 zugegriffen und Bewegungsdaten, Systemzustände und Peripheriezustände aus der Datei 12 in den Interpolator 5.3 eingelesen. System- und Peripheriezustände können aus externen oder internen Diagnose- und Modifikationswerkzeugen 11 in die Datei 12 des Bewegungsobjekts eingelesen bzw. ausgelesen werden. Daten eines Sensortreibers 5.6 können synchron in Echtzeit über die Zugriffsbibliothek 5.5 zusätzlich zu den Daten aus der Datei 12 in den Interpolator 5.3 eingelesen werden.

Bei Bewegungsobjekten, die Daten in funktionaler Form speichern, erfolgt die Auswertung durch Aufruf der entsprechenden Rechnungsvorschrift im Kontext der zyklischen Ausführung. Es ist auch möglich, den standardmäßig vorhandenen Compiler bzw. Interpreter 5.1 einer Robotersteuerung 5 zu verwenden, um als Zeichenkette gegebene Funktionen auszuwerten.

Zur Bestimmung von Positionsdaten werden in Robotersteuerungen 5, 5a gewisse Bezugssysteme definiert, wie Werkzeug-Koordinatensysteme, Basis-Koordinatensysteme und Welt-Koordinatensysteme. Diese müssen ebenfalls im Bewegungsobjekt gespeichert werden, da kartesische Positionen nur zusammen mit diesen Koordinatensystemen eine eindeutige Bestimmung der Roboterposition ermöglichen. Dies, wie die u.a. erforderlichen Prüfungen bei der Wiedergabe eines Bewegungsobjekts, ob aktuelle Koordinatensysteme der Steuerung und Koordinatensysteme im Bewegungsobjekt identisch sind, die Bestimmung von Lastdaten, die sich während der Bewegung ändern können, ist hier zur Vereinfachung nicht dargestellt.

Die Erfindung beinhaltet weiterhin die Definition einer Basisklasse von Bewegungstreibern in einer Definitionsdatei.

Diese Klasse beschreibt einen Bewegungstreiber zur Verwaltung einer Sammlung von Bewegungsobjekten.

Diese Klasse ist abstrakt. Die Kenntnis dieser Dateien und der erforderlichen Entwicklungsumgebung reicht aus, um einen Treiber gemäß dieser Schnittstellen-Spezifikation zu erstellen. Wesentlich ist die Abfrage von Bewegungs-, System- und Peripheriezuständen über die Systemzeit; dies entspricht der oben beschriebenen funktionalen Abhängigkeit.

Ausgehend von der vorgenannten (abstrakten) Spezifikation der erfindungsgemäßen Schnittstelle erfolgt die Implementierung eines konkreten Treibers für Bewegungsobjekte in der folgenden Weise:

Zunächst wird für eine spezielle Realisierung eines - aus der Sicht der Robotersteuerung - externen Treibers passend zur Schnittstelle für Bewegungsobjekte eine Spezialisierung der Basisklassen implementiert. Hierzu ist eine Definition einer Struktur zur Speicherung von Bewegungs-System- und Peripheriezuständen nötig, wie beispielsweise eines Greifers.

Weiter erfolgt eine konkrete Realisierung eines Bewegungsobjekts, die etwa für eine feste Anzahl von Interpolationstakten Daten speichert und die erwähnten Routinen zum Laden, Speichern und Aufzeichnen (und gegebenenfalls weitere spezifische Funktionen) für das entsprechende Format implementiert.

Weiterhin rückt eine konkrete Realisierung eines Bewegungstreibers mit einer Implementierung der Funktion, die die Befehle aus der Programmiersprache an den Treiber weitergibt.

Diese Definitionen werden in einer Treiberdatei abgelegt, die auch eine Datei der Roboterbibliothek einbindet. Der Programm-Quelltext kann in Maschinen interpretierbaren Objekt-Code übersetzt werden, der in einer Datei abgelegt wird.

Betriebssysteme, insbesondere die in Robotersteuerungen eingesetzten Echtzeit-Betriebssysteme, besitzen einen Mechanismus zum dynamischen Binden. Diese ermöglicht es, den Code eines Hauptprogramms, etwa des Kerns der Robotersteuerung, während des Betriebs um weiteren Code, etwa der Bewegung der Objekt-Schnittstelle zu erweitern. Dazu sind Variablen bzw. Einträge in der sogenannten Symbol-Tabelle erforderlich, die sowohl dem Hauptprogramm als auch dem Erweiterungsprogramm bekannt sind. Es wird diesbezüglich verwiesen auf die Deutsche Patentanmeldung DE 101 25 245.

Im Falle der vorliegenden Erfindung wird bei jeder Verwendung der Schnittstelle überprüft, ob ein Treiber für Bewegungsobjekte in Form ausführbarer Objektcodes vorhanden ist. Gegebenenfalls wird dieser Objektcode zur Steuerung gebunden. Durch Symbolnamen, die sowohl dem Kern der Robotersteuerung als auch dem Treiber bekannt sind, wird entsprechend der vorgenannten Patentanmeldung ermöglicht, dass Methoden (Funktionsaufrufe) des Bewegungstreibers von der Kernsteuerung über Schnittstellenbefehle aufgerufen werden.

Erfindungsgemäß wird die Programmiersprache der Robotersteuerung zum Ansprechen der Schnittstellenfunktion zumindest ergänzt um:

- einen Befehl zur Kommunikation von Kommandos an die Schnittstelle. Bevorzugt sind auch Erweiterungen, bei denen Variablen der Robotersteuerung an die Schnittstelle übergeben und gegebenenfalls von der Schnittstelle geändert werden können;

- einen Befehl zur Wiedergabe von Bewegungsobjekten. Dieser Befehl zur Wiedergabe unterscheidet sich von dem Befehl zur Kommunikation dadurch, dass aktiv eine Bewegung mit Änderung von System-/Peripheriezuständen für die Dauer des Bewegungsobjekts generiert wird, während der Befehl zur Kommunikation typischerweise kurze Konfigurationskommandos darstellt, die Bewegungen und System-/Peripheriezustände nicht beeinflussen;

- einen Befehl zur Abfrage von Positionsdaten der Bewegungsschnittstelle zu einer bestimmten Zeit. Dieses Kommando wird vor allem benutzt, um Zustellbewegungen zum Start (d.h. Zeit 0) eines Bewegungsobjekts zu realisieren.

Durch die Kommunikation von Kommandos in bevorzugter Weise in Form von Zeichenketten ist durch eine Speichererweiterung ein Mechanismus geschaffen, mit dem eine Vielzahl von Möglichkeiten der Kommunikation mit der Bewegungsschnittstelle besteht, obwohl die Programmiersprache der Steuerung nur um einen Befehl erweitert wurde.

Optional sind weitere Befehle denkbar, etwa die Abfrage der Roboterposition, von System- und/oder Peripheriezuständen zu einem bestimmten Zeitpunkt und deren Zuweisung an Variablen der Programmiersprache sowie die Einbindung von Befehlen der Bewegungsschnittstelle in eine graphische Oberfläche.

Befehle über die Schnittstelle an den Treiber können umfassen:

1. Aufzeichnen von Bewegungsobjekten.

2. Administration von Bewegungsobjekten in internen und/oder externen Speichern, die sich an der Verwaltung eines Dateisystems oder Videorecorders orientierten:

a) Erzeugen, Löschen, Umbenennen eines Bewegungsobjekts sowohl im flüchtigen als auch nichtflüchtigen Speicher.

b) Laden und Speichern eines Bewegungsobjekts von/auf externen (nichtflüchtigem) Speicher.

c) Abfragefunktion für vorhandene Bewegungsobjekte (bei Verwendung der Schnittstellen-Kommando-Variante mit zusätzlichen Variablen) beispielsweise zur Abfrage etwa der Dauer eines Bewegungsobjekts.

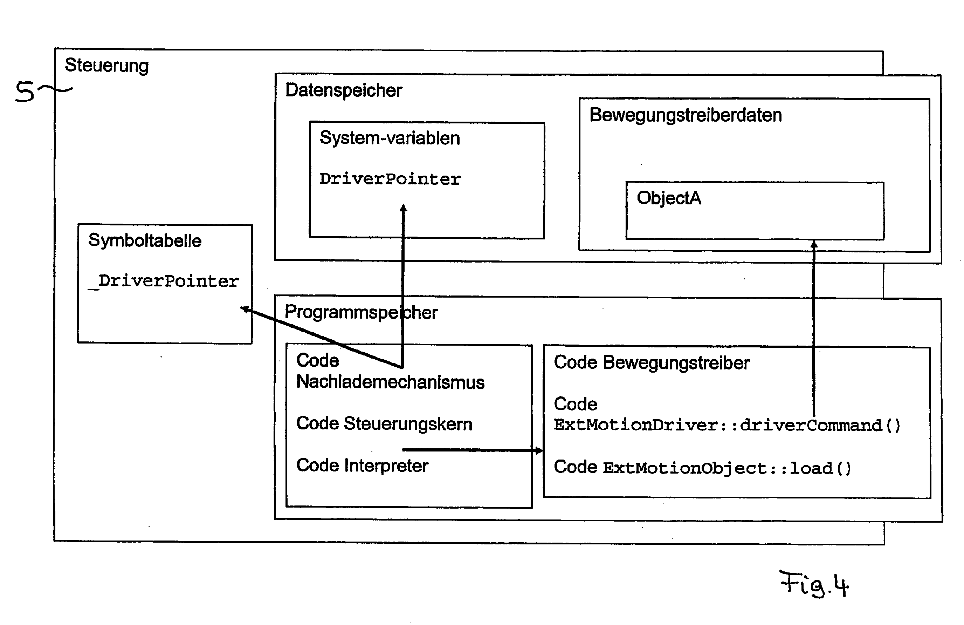

Dies ist im Blockschaltbild der Fig. 4 schematisch dargestellt, die den Ablauf bei der Übermittlung eines Treiberkommandos veranschaulicht: Dem Steuerungskern und dem nachgeladenen Treiberobjekt ist über die Symboltabellen ein Symbol bekannt, in dem durch den Nachlade-Mechanismus ein Zeiger auf den Bewegungstreiber eingetragen wird. Ein Befehl der Programmiersprache führt dann in den Aufruf der Treibermethode.

Alle Operationen verwenden in einer realen Implementierung der Erfindung die für eine Multitasking-Echtzeit-Umgebung erforderliche Verriegelungs- und Synchronisierungs-Mechanismen, die zum Beispiel verhindern, dass ein Bewegungsobjekt von einer Task gelöscht wird, während es von einer anderen Task bearbeitet wird.

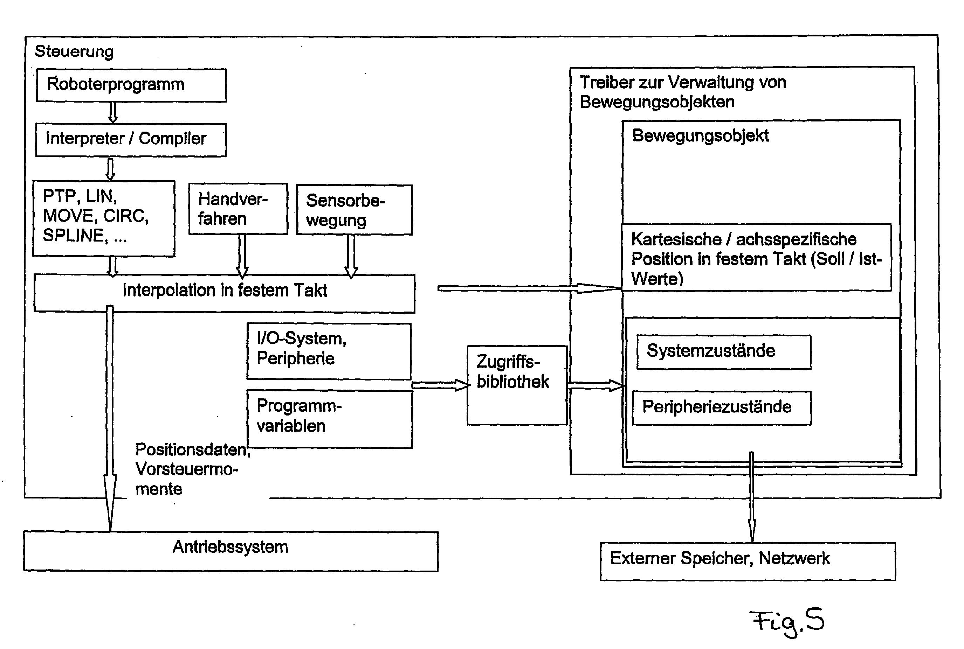

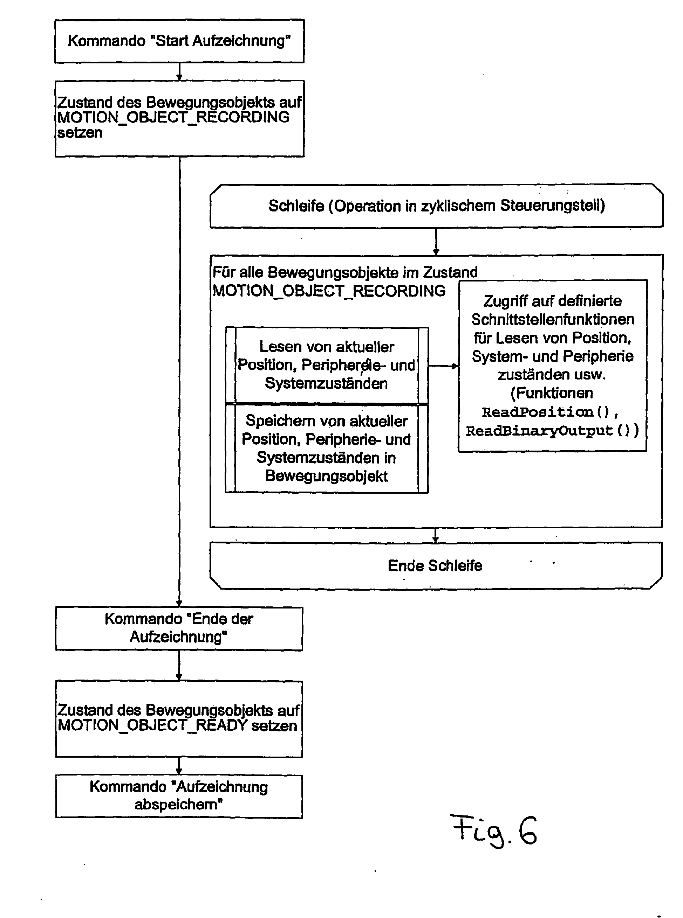

Zwischen einem Bewegungsobjekt-spezifischen Befehl "Beginn der Aufzeichnung" und einem Befehl "Ende der Aufzeichnung", die entweder von einem Bediengerät oder einem Programm gesendet werden, werden zyklische Bewegungs-, System- und/oder Peripherie-Zustände an das Bewegungsobjekt gesendet, wie dies durch Pfeile in der Fig. 5 und in seinem einzelnen Ablauf im Flussdiagram der Fig. 6 dargestellt ist. Nach dem Start der Aufzeichnung wird der Aufzeichnungszustand des Bewegungsobjekts auf aktiv gesetzt. In einer Schleife wird für alle Bewegungsobjekte in diesem aktiven Zustand ein Lesen von aktuellen Positions-Peripherie- und Systemzuständen durchgeführt, wobei auf definierte Schnittstellen-Funktionen für das Lesen von Positions-System- und Peripheriezuständen etc. zugegriffen wird. Weiterhin erfolgt in der Schleife ein Speichern von aktuellen Positions-Peripherie- und Systemzuständen im Bewegungsobjekt. Nach der Beendigung der Aufzeichnung wird der Aufzeichnungszustand des Bewegungsobjekts auf fertig gesetzt, woraufhin eine Abspeicherung erfolgt.

Hierzu wird in einem zyklisch - bevorzugt im Interpolationstakt der Steuerung - durchlaufenen Teil der Steuerung ein Aufruf-Mechanismus für Bewegungsobjekte geschaffen.

Die erforderlichen Befehle werden vorzugsweise im Interpreter der Steuerung bearbeitet, der nicht in einer festen Taktung läuft.

In einem zyklisch durchlaufenen Teil der Steuerung werden alle Bewegungsobjekte auf den Aufzeichnungszustand geprüft, d.h. die Aufzeichnung läuft. Gegebenenfalls wird für diese Objekte die Aufzeichnungsschnittstellenfunktion aufgerufen, wobei mehrere Objekte gleichzeitig aufzeichnen können. Diese Funktion ist im nachgeladenen Treibermodul implementiert, zeichnet also in einem für den Treiber spezifischen Format auf. Diese ruft wiederum Lesefunktionen aus der Zugriffsbibliothek auf und speichert die gelesenen Werte im internen Speicher des Bewegungsobjekts, bevorzugt in einer Tabelle.

Falls das Bewegungsobjekt zur Wiedergabe eingesetzt werden soll, so muss sichergestellt sein, dass der Bewegungsverlauf mit Geschwindigkeit und Beschleunigung 0 für alle Achsen des Roboters endet, da sich andernfalls bei der Wiedergabe ein Sprung ergibt, der physikalisch nicht realisierbar ist.

Fertig erzeugte Bewegungsobjekte können über ein Speicherkommando auf externe Speicher geschrieben werden, um später zur Wiedergabe, Modifikation und/oder Optimierung oder Diagnose eingesetzt zu werden.

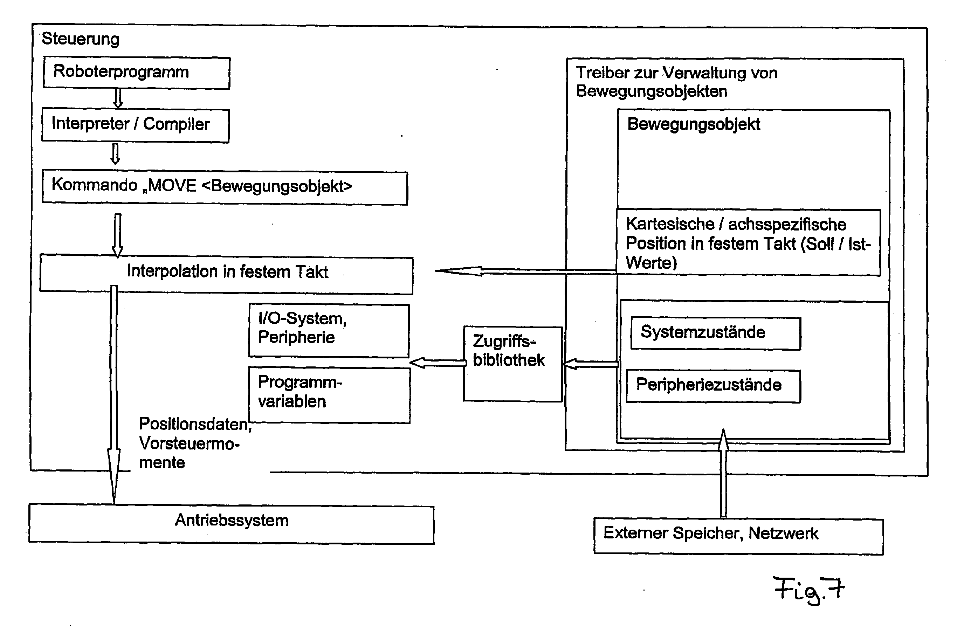

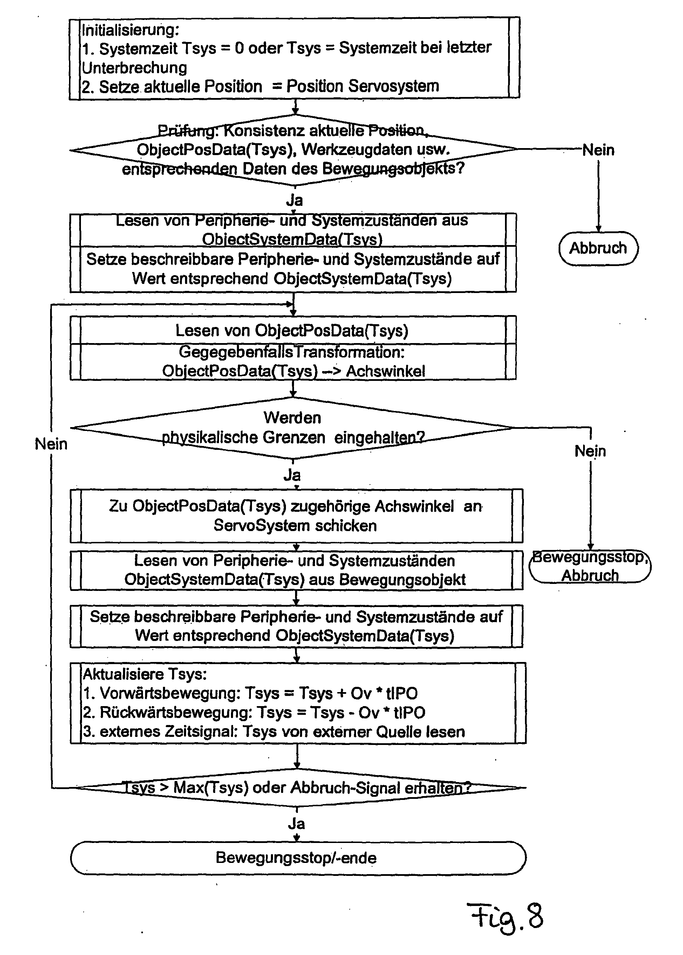

Im folgenden wird die Wiedergabe von Bewegungsobjekten unter Bezug auf das Blockdiagram der Fig. 7 sowie das Flussdiagram der Fig. 8 beschrieben.

Ausgangspunkt ist ein im Speicher vorhandenes Bewegungsobjekt. Im Beispiel wird die unabhängige Größe, die das Bewegungsobjekt parametriert, als Zeit interpretiert. Derselbe Ablauf kann aber auch für den Fall "Königswelle" mit dem Königswellen-Winkel als unabhängige Größe durchgeführt werden.

Das Bewegungsobjekt kann über einen Ladebefehl erzeugt worden sein oder implizit durch Laden eines Bewegungstreibers über die Schnittstelle erzeugt worden sein, wobei der Treiber etwa einen festen Satz von Bewegungsobjekten mitliefert, auf die nur lesend zugegriffen werden kann.

Durch eine geeignete Befehlsfolge wird ein Bewegungsobjekt einschließlich zeitlich entsprechenden System- und/oder Peripheriezuständen wiedergegeben. Ausgangslage ist, dass Robotersteuerungen nach dem Stand der Technik so programmiert werden, dass nur der Zielpunkt der Bewegung angegeben wird, während als Startpunkt die aktuelle Position verwendet wird. Abhängig von der aktuellen Position ergeben sich für einen Linearbefehl dann unterschiedliche Bewegungen. Der Bewegungsbefehl zur Wiedergabe unterscheidet sich davon, weil die vollständige Bewegung als Funktion der Zeit vorgegeben ist. Eine Ausführung ist nur möglich, wenn die aktuelle Position mit der Startposition des Bewegungsobjekts übereinstimmt. Daher wird zunächst die Startposition des Bewegungsobjekts abgefragt, wobei angenommen wird, dass die unabhängige Größe als Zeit interpretiert wird, und mit einer Punkt-zu-Punkt-Bewegung dorthin positioniert wird.

Über den Bewegungsbefehl zur Wiedergabe wird dann, wie dies im Flussdiagram der Fig. 8 dargestellt ist, die Ausführungen der in einem Bewegungsobjekt beschriebenen Bewegung angestoßen. Dazu wird zunächst die Systemzeit initialisiert, typischerweise auf TSys=0 oder auf die Systemzeit einer letzten Unterbrechung, wenn eine solche eingetreten ist.

Sodann wird geprüft, ob die aktuellen Koordinatensysteme der Robotersteuerung und die des Bewegungsobjekts sowie eventuell weitere relevante System- und Peripheriezustände übereinstimmen. Falls nicht, erfolgt ein Abbruch.

Anschließend werden System- und Peripheriezustände auf den im Bewegungsobjekt gespeicherten Zustand zum Zeitpunkt TSys initialisiert. Dies unterscheidet sich von dem folgenden zyklischen Teil der Bearbeitung, weil zu Beginn der Bewegung typischerweise viele Operationen zur Initialisierung nötig sind, während zyklisch nur wenige Änderungen von System- und Peripheriezuständen stattfinden, wie z.B. ein Öffnen und Schließen des Greifers nur wenige Male, wie etwa zehn Mal innerhalb eines Zyklus von einer Minute Dauer, der 500 bis 1000 Interpolationstakten entspricht.

Zyklisch wird dann in jedem Interpolationstakt die der internen Systemzeit entsprechende Position aus dem Bewegungsobjekt gelesen und an die Servo-Einheit des Roboters geschickt. Beschreibbare System- und Peripheriezustände werden ebenfalls zyklisch gelesen. Synchron zur Bewegungsausführung werden also diese System- und/oder Systemzustände, soweit möglich, wieder hergestellt. Vorteilhaft erfolgt ein in der Regel zeitaufwändiger Zugriff auf die Peripherie nur, wenn sich der Peripheriezustand tatsächlich geändert hat, wie ein Beispiel des Öffnen und Schließens des Greifers mit nur etwa zehn Peripheriezugriffen innerhalb eines Zyklus von einer Minute Dauer entsprechend 500 bis 1000 Interpolationstakt.

Da das Bewegungsobjekt potentiell extern erzeugt wurde und physikalische Grenzen des Robotersystems bei der Bewegung verletzt werden können, werden bei der Bewegungsausführung physikalische Grenzen schon bei den Soll-Werten, wie maximale Geschwindigkeiten, Momente und Energie überwacht; dasselbe gilt für sicherheitstechnische Vorschriften wie maximale Flanschgeschwindigkeit des Roboters im Test-Betrieb oder dergleichen. Weitere Überwachungen basieren auf gemessenen Ist-Werten der Anlage, wie Motorposition-, Temperatur-, Strom sowie daraus berechneten Größen. Bei einer Verletzung der Grenzen wird eine Fehlerreaktion ausgelöst; es werden z.B. Bewegungsausführungen abgebrochen, der Zyklus zu Ende gefahren und dann die Programmausführung abgebrochen und die Ausführungsgeschwindigkeit reduziert.

Am Ende jedes Interpolationstaktes wird die Systemzeit aktualisiert, entweder über einen Override-Mechanismus, wie er unten beschrieben wird, oder über einen externen Eingang.

Das Ende der Bewegungsausführungen ist erreicht, wenn entweder die Systemzeit die Dauer des Bewegungsobjekts überschreitet oder ein Abbruchsignal eintrifft. Der Vorteil dieses Vorgehens liegt darin, dass frei definierte Bewegungsprofile, die nicht mit Hilfe des Manipulators erzeugt wurden, sowie zugehörige Peripherie- und/oder Systemzustände über einen integrierten Mechanismus zur Laufzeit der Steuerung verarbeitet und ausgeführt werden können.

Die Schnittstellen-Befehle sind Bestandteil der Programmier-Sprache und nicht nur dem Hersteller der Steuerung zugänglich.

Es ist auch zulässig, dass von Bewegungsobjekten nur gewisse Komponenten der Bewegungs-System- und/oder Peripheriezuständen (parametrierbar) wiedergegeben werden, z.B. nur der Orientierungsanteil der Bewegung, nur gewisse Ausgänge oder dergleichen. Beispielsweise können auch nur Systemzustände verwendet werden und nicht die eigentliche Bewegungsdaten, um etwa über einen Analogausgang den Auftrag von Kleber auf einer festen Bahn zu optimieren.

Beispielsweise kann die Düse einer Klebepistole über einen geschwindigkeitsproportionalen Analogausgang angesteuert werden, so dass unabhängig von der Bewegungsgeschwindigkeit der Düse gleichmäßiger Kleberauftrag gewährleistet ist. Beim Öffnen und schließen der Düse stimmt die Annahme, dass der Klebstoffdurchfluss proportional der Geschwindigkeit ist, erfahrungsgemäß nicht mit der Wirklichkeit überein. Bei bekannten Robotersteuerungen bzw. Werkzeugsteuerungen besteht keine Möglichkeit den Analogwert, bzw. eine Spannungswert, des geschwindigkeitsproportionalen Analogausgangs gesondert zu behandeln d.h. einzustellen. Liegt jedoch ein aufgezeichnetes Bewegungsobjekt gemäß der Erfindung vor, so kann bei unvorteilhaftem Kleberauftrag der Analogwert zu Beginn des Kleberauftrags d.h. beim Öffnen der Düse und am Ende des Kleberauftrags d.h. beim Schließen der Düse modifiziert werden. Dazu können bspw. die Analogwerte in der gespeicherten Datei numerisch geändert werden und das derart modifizierte Bewegungsobjekt anschließend ausgeführt werden, so dass ein verbesserter Kleberauftrag erreicht wird.

Nach dem Stand der Technik besitzen Robotersteuerungen einen sogenannten Override-Mechanismus, der die Ausführungen von Bewegungen in einer anderen als der programmierten Geschwindigkeit erlaubt. Der Override wird dabei als Prozentwert $0 < O_{V \leq 100}$ angegeben.

In jedem Interpolationstakt (IPO-Takt) mit dem Zeitraster T_IPO SEKUNDEN wird die Systemzeit TSys um (Ov/100)*T_IPO erhöht, es erfolgt also eine Zeitskalierung derart:

$$TSys: = TSys+(Ov/100)*T\_IPO.$$

Eine alternative Interpretation beinhaltet, dass in jedem Interpolationstakt die Systemzeit so weit erhöht wird, dass die Geschwindigkeit aller Achsen (auch kartesischer Komponenten) unter Ov-Prozent des Maximalwerts der Geschwindigkeit bleiben (Geschwindigkeitskappung):

$$TSys: = TSys+(Ov/100)*T\_IPO,$$

falls alle Achsen bzw. kartesischen Positionsgrößen Ov-Prozent der jeweiligen Maximalgeschwindigkeit nicht überschreiten:

$$TSys: = TSys+Faktor*T_{IPO},$$

wobei Faktor=Max(F): Geschwindigkeit der Bewegung überschreitet Ov-Prozent der Maximalgeschwindigkeit nicht, wenn innerhalb von $T_{IPO}$ eine Bewegung von Pos(TSys) zu Pos(TSys+Ov/100*T_IPO) erfolgt.

Ein Rückwärtsfahren kann durch Override-abhängige Reduzierungen der Systemzeit implementiert werden, d.h. $O_{V\leq0}$.

Eine ähnlicher Effekt wie das Verfahren der Geschwindigkeitskappung kann auch erzielt werden, wenn bereits in der Bewegungsplanung Geschwindigkeitsgrenzen auf Ov-Prozent reduziert werden. Dann ist aber keine Änderung des Overrides online während der Ausführung der Bewegung mehr möglich.

Gemäß der Erfindung wird die Systemzeit nach eben diesem üblichen Verhalten der Zeitskalierung oder Geschwindigkeitskappung auch bei Bewegungen, die über die Schnittstelle laufen, Override-abhängig verändert. Dieses Verfahren ist möglich, weil die Kommunikation mit der Bewegungsschnittstelle über die Systemzeit erfolgt, anders als bei Sensortreibern, wo unabhängig von der Systemzeit in regelmäßigen Takten eine Korrektur bzw. ein Positions-Soll-Wert abgeholt und ausgeführt wird. Der Vorteil dieses erfindungsgemäßen Vorgehens liegt darin, dass alle Mechanismen einer Steuerung nach dem Stand der Technik, die intern die Systemzeit verwenden, wie Rückwärtsfahren, Override, Not-Aus, reduzierte Geschwindigkeit in Test-Betriebsarten, benutzt werden können.

Durch die Erfindung wird bei kleinem Override die Bahn in der dem Bewegungsobjekt verfügbaren Genauigkeit ausgeführt, soweit ein Datenformat im Bewegungsobjekt verwendet wird, das Bewegungen anders als im obigen Beispiel nicht nur über diskrete Werte, etwa im Interpolationstakt parametriert, sondern kontinuierliche Funktionen der Zeit, wie etwa Polynome oder Splines parametriert: Werden bei einem IPO-Takt von 0,5 Millisekunden nur die diskreten Werte an Vielfachen von 0,5 Millisekunden gespeichert, kann auch über ein Bewegungsobjekt der genaue Verlauf der gewünschten Sinusfunktion nicht rekonstruiert werden - selbst wenn statt linearer Interpolation Polynome höherer Ordnung verwendet werden. Die Sinusfunktion kann aber auf einfachste und speichersparende Weise ohne Verwendung einer Tabelle durch ein Bewegungsobjekt realisiert werden, das die Positionsabfrage folgendermaßen implementiert.

Dadurch kann bei beliebiger Vorgabe der Systemzeit TSys, die nicht notwendig ein Vielfaches des IPO-Taktes ist, die Sinuskurve rekonstruiert werden, wodurch komplexe Bewegungen und Verläufe von System- und Peripheriezuständen exakt wiedergegeben werden können.

Die bisherige Darstellung verwendete die interne Systemzeit als unabhängige Größe, die als Argument für die durch das Bewegungsobjekt dargestellte Funktion verwendet wird, d.h. anschaulich als "Position im Bewegungsobjekt". In einer andere bevorzugte Ausprägung der Erfindung wird die interne Systemzeit der Robotersteuerung zur Abtastung der Bewegungsprofile ignoriert. Statt dessen wird die Bewegungsausführung über einen funktionalen Zusammenhang von bekannten Größen der Steuerung modifiziert: z.B. wird die Systemzeit einer externen Steuerung von einem Analog-Eingang ohne die Position einer mechanischen oder elektronischen Leitwelle zum zyklischen Abfragen eines Bewegungsprofils mit Option der Override-Änderung gelesen.

Läuft beispielsweise, wie dies für das Beispiel der oben genannten Fig. 1 vorausgesetzt wurde, die dortige Pressensteuerung autonom und besitzt eine eigene Systemzeit, wie eine Echtzeit, wird diese den Robotersteuerungen 5, 5a mitgeteilt. Die zyklische Bewegung der Roboter 3, 3a wird über ein Bewegungsobjekt gesteuert, das die Systemzeit der Pressensteuerung einliest. Dazu müssen die Bewegungsobjekte für die Roboter 3, 3a die gleiche Dauer besitzen, nämlich genau die Zyklus-Dauer TP der Presse und eine zyklische Struktur aufweisen, d.h. die durch die Bewegungsobjekte definierten Positionen zum Zeitpunkt 0 und TP müssen übereinstimmen, wie ebenso mindestens die erste und zweite Ableitung der Position, also Geschwindigkeit und Beschleunigung.

Die lokale Systemzeit der Pressensteuerung wird über einen Feldbus oder einen Analogausgang an die Robotersteuerungen 5, 5a übergeben. Die Pressensystemzeit TSysPresse wächst vom Start der gesamten Anlage an von 0. Die Bewegungstreiber der beiden Robotersteuerungen 5, 5a lesen die Pressensystemzeit ein und berechnen über T=TSysPresse ModTP (Modulo-Operation, d.h. T = "Rest" der Division von TSysPresse durch TP: TSysPresse = N*TP, wobei N ganzzahlig, $0 \leq T < TP$, N maximal groß) einen Zeitpunkt innerhalb eines Prozesszyklus und fahren die Position ObjectPos (T) an.

Wird die Presse 2 in einer langsameren Betriebsart betrieben, erhalten die Robotersteuerungen 5, 5a eine langsamer wachsende Systemzeit, wodurch weiterhin die Kollisionsfreiheit gesichert wird. Bei einem Not-Stop der Presse 2 wird die Systemzeit der Pressensteuerung 4 angehalten, wodurch automatisch auch die Roboter 3, 3a stoppen, da die Bewegungsobjekte jetzt eine konstante Systemzeit von der Pressensteuerung 4 erhalten. Es ist auch möglich, die Presse 2 "rückwärts" laufen zu lassen, etwa zum Freifahren nach einer Störung. Die Kommunikation zwischen den Einheiten reduziert sich auf zyklische Übermittlungen der Systemzeit in eine Richtung. Aufwendiger Austausch von Synchronisationssignalen zwischen allen beteiligten Steuerungen entfällt.

Alternativ kann die Position der Pressensteuerung 4 als "Winkel" Q einer elektronischen Leitwelle interpretiert werden, der Werte zwischen 0° und 360° annehmen kann. Dieser Winkel Q wird als Argument für die vom Bewegungsobjekt repräsentierte Funktion verwendet. Da der Winkel den Bereich 0° ... 360° nicht verlassen kann, entfällt die oben angegebene Modulo-Operation. Die Bewegungsobjekte werden weiterhin als Darstellung eines Zyklus mit Länge 360° aufgefasst. Die Position des Bewegungsobjekts wird dann über ObjectPos (Q) abgefragt, wobei der Winkel Q zyklisch von der Pressensteuerung an die Robotersteuerung übertragen wird.

Eine Interpretation ist auch dann vorteilhaft, wenn der Roboter sich als Ganzes auf einer Verfahr- und Bewegungsvorrichtung, wie einer Schiene, auf einer ihn drehenden Dreheinheit oder auf einer in der Ebene oder im Raum verfahrbaren Linear-Einheit bewegt wird, um den erreichbaren Raum während des Betriebs zu vergrößern. Die Bewegung des Roboters ist fest vorgegeben und hängt von der Position der Verfahrvorrichtung ab. Die unabhängige Größe wird mit einer Position des Roboters auf der Verfahreinheit gleichgesetzt. Die Position der Verfahreinheit entspricht also der Position der Presse im vorgenannten Beispiel. So wird sichergestellt, dass der Roboter immer die zur aktuellen Umgebung passenden Bewegungen synchron durchführt. Die Roboterbewegungen in einer Entertainment-Anwendung sollen synchron zu Bild- und Tondaten (Film) durchgeführt werden. Die Position eines Video- oder Tonbandes wird als unabhängige Größe interpretiert. Muss wegen einer technischen Störung im Betrieb die Entertainment-Anwendung gestoppt werden, so bewegt sich der Roboter nach Neustart automatisch wieder synchron zum Film.

In einer anderen Anwendung im Entertainment-Bereich werden mehrere Roboter ohne Bild- und Tondaten synchron untereinander gesteuert, so dass z.B. im eingeschränkten Raum eines Freizeitparks die Roboter in ihrem Bewegungsablauf nicht kollidieren.

Es ist in Erweiterung der bisher geschilderten Erfindung möglich, die Schnittstelle und die Programmierbefehle zur Verwaltung mehrerer Bewegungstreiber auszubauen, etwa dem Bewegungstreiber Namen zuzuordnen. Dann können die Treiber zu verschiedenen Versionen gleichzeitig verwendet werden.

**Bezugszeichenliste**

| | |
|---|---|
| 1 | Automatisierungsanlage |
| 2 | Presse |
| 3, 3a | Roboter |
| 4 | Pressensteuerung |
| 5, 5a | Robotersteuerung |
| 5.2 | Bewegungsplanung |
| 5.3 | Interpolator |
| 5.4 | Antriebsschnittstelle |
| 5.5 | Zugriffsbibliothek |
| 5.6 | Sensortreiber |
| 5.7 | Einrichtung |
| 6, 6a | Greifer |
| 7 | Rohblech |
| 7a | Formteil |
| 12 | Datei |
| Q | Winkel |

**Patentansprüche**

1. Verfahren zum Ansteuern mindestens eines Roboters mittels eines Roboterprogramms, das mindestens einen Programmbefehl enthält, auf dessen Grundlage die Roboter von einer Steuerungsvorrichtung angesteuert werden, **dadurch gekennzeichnet, dass** der Programmbefehl zur Interpretation eines frei definierbaren Bewegungsobjekts herangezogen wird und durch die Verwendung des Bewegungsobjektes die Roboterpositionen, sowie Peripherie- und Systemzustände inkl. weiterer ansteuerbarer Achsen in Abhängigkeit einer Leitgröße bestimmt wird.

2. Verfahren nach Anspruch 1, **dadurch gekennzeichnet, dass** ein Bewegungsobjekt eine individuelle Vorschrift zur Berechnung der Roboterpositionen, Peripherie- und Systemzustände enthält.

3. Verfahren nach Anspruch 2, **dadurch gekennzeichnet, dass** die Roboterpositionen, Systemzustände, Peripheriezustände und/oder Sensorsignal synchron zur Leitgröße der Steuerungsvorrichtung erfasst werden.

4. Verfahren nach Anspruch 2 oder 3, **dadurch gekennzeichnet, dass** die Roboterpositionen, Systemzustände, Peripheriezustände und/oder Sensorsignalen mit Hilfe einer Bibliothek von Zugriffsfunktionen zum Wiederaufruf gespeichert werden.

5. Verfahren nach einem der Ansprüche 1 bis 4, **dadurch gekennzeichnet, dass** als Leitgröße eine der Steuerung zugängliche Größe eines funktionellen Zusammenhangs für die Bewegungsführung, insbesondere eine mechanische oder elektronische Königswelle des Roboters oder einer Peripheriemaschine verwendet wird.

6. Verfahren nach einem der Ansprüche 1 bis 4, **dadurch gekennzeichnet, dass** als Leitgröße die Systemzeit des Roboters verwendet wird.

7. Verfahren nach Anspruch 6, **dadurch gekennzeichnet, dass** die mit Hilfe einer Bibliothek von Zugriffsfunktionen aufgezeichnete Daten von Roboterpositionen, Systemzustände, Peripheriezustände und/oder Sensorsignal im Raster des Interpolationstaktes zur Optimierung Roboterprogramms editierbar werden.

8. Verfahren nach einem der Ansprüche 1 bis 7, **dadurch gekennzeichnet, dass** die aufgezeichneten und/oder editierten Bewegungsobjekte des Roboterprogramms unter synchroner Wiederherstellung von externen Signalen und/oder Bewegungs-, System- und/oder Peripheriezuständen ausgeführt werden.

9. Verfahren nach einem der Ansprüche 4 bis 8, **dadurch gekennzeichnet, dass** Daten der Bewegungsobjekte in einer Tabelle gespeichert sind und erforderliche Zwischenwerte durch Interpolation gewonnen werden.

10. Verfahren nach einem der Ansprüche 4 bis 9, **dadurch gekennzeichnet, dass** für Daten, die in funktionaler Form in dem Bewegungsobjekt gespeichert sind, ein Aufruf einer entsprechenden Berechnungsvorschrift und deren Auswertung insbesondere mittels eines Compilers oder Interpreters der Steuerungsvorrichtung erfolgt.

11. Verfahren nach einem der Ansprüche 4 bis 10, **dadurch gekennzeichnet, dass** Bezugssysteme und/oder Lastdaten definiert und in einem Bewegungsobjekt gespeichert werden.

12. Verfahren nach einem der Ansprüche 4 bis 11, **dadurch gekennzeichnet, dass** Maschinenposition, System- und/oder Peripheriezustände zum bestimmten Zeitpunkt abgefragt und an Variablen zugewiesen werden.

13. Verfahren nach einem der Ansprüche 4 bis 12, **dadurch gekennzeichnet, dass** ein Bewegungsobjekt zusammen mit zeitlich entsprechenden System- und/oder Peripheriezuständen wiedergegeben wird.

14. Verfahren nach einem der vorangehenden Ansprüche, **dadurch gekennzeichnet, dass** vor Durchführung einer Roboterbewegung zunächst die Startposition des Bewegungsobjekts abgefragt und der Roboter mit einer Punkt-zu-Punkt-Bewegung dorthin positioniert wird.

15. Verfahren nach einem der Ansprüche 6 bis 14, **dadurch gekennzeichnet, dass** in jedem Interpolationstakt die der internen Systemzeit entsprechende Position aus dem Bewegungsobjekt gelesen und an eine Antriebseinheit der Maschine gesendet wird.

16. Verfahren nach einem der Ansprüche 15, **dadurch gekennzeichnet, dass** beschreibbare System- und Peripheriezustände zyklisch, insbesondere im Interpolationstakt gelesen und gegebenenfalls, soweit zugelassen, wiederhergestellt werden.

**17.** Verfahren nach Anspruch 16, **dadurch gekennzeichnet, dass** ein Peripheriezugriff nur erfolgt, wenn sich der Peripheriezustand tatsächlich geändert hat.

Roboter 1

Roboter 2

1

2

4

6

7

7a

6a

3

3a

Steuersignale

Steuersignale

Steuerung
Roboter 1

Bewegungs
treiber
Bewegungsobjekt 1

Steuerung
Presse

Bewegungs
treiber
Bewegungsobjekt 2

Steuerung
Roboter 2

5a

Systemzeit
Presse

4

Systemzeit
Presse

5b

Fig. 1

Robotersteuerung

5

S.1 Interpreter /
Compiler

Fester Satz von
S.2 Programmbewegungen
Handverfahrbewegungen

Bewegungsplanung

S.7

Bewegungsdatene
Systemzustände
Peripheriezustände

Interpolation

S.3

Antriebsschnittstelle

S.4

Zugriffsbibliothek

S.5

Externes /
Internes
Diagnose- und
Modifikationswerkzeuge

11

Datei 12

Sensortreiber

S.6

Fig. 2

Erzeugung off-line Simulation, Optimierung, CAD,...

Visualisierung:
- Performance-Analyse
- Parameter-optimierung
- Inbetrieb-nahme

Externer Speicher

Bewegungsobjekt

Bewegungsobjekt

Änderung
- Optimierung von Hand
- Automatische Optimierung
- Optimierung mehrerer Anlagen parallel
- Andere Verarbeitung

S

Steuerung

Bewegungsobjekt

Bewegungsobjekt

Bewegungsobjekt

Flüchtiger / nichtflüchtiger Speicher

Aufzeich-nen

Wieder-geben

Fig. 3

⟺ Bedeutet: gerichtete Datenübertragung

EP 2 110 727 A2

## Steuerung

5

### Datenspeicher

#### System-variablen

`DriverPointer`

#### Bewegungstreiberdaten

ObjectA

### Symboltabelle

`_DriverPointer`

### Programmspeicher

#### Code Nachlademechanismus

Code Steuerungskern

Code Interpreter

#### Code Bewegungstreiber

Code
`ExtMotionDriver::driverCommand()`

Code `ExtMotionObject::load()`

Fig.4

Fig.5

Kommando "Start Aufzeichnung"

Zustand des Bewegungsobjekts auf MOTION_OBJECT_RECORDING setzen

Schleife (Operation in zyklischem Steuerungsteil)

Für alle Bewegungsobjekte im Zustand MOTION_OBJECT_RECORDING

Lesen von aktueller Position, Peripherie- und Systemzuständen

Speichern von aktueller Position, Peripherie- und Systemzuständen in Bewegungsobjekt

Zugriff auf definierte Schnittstellenfunktionen für Lesen von Position, System- und Peripherie zuständen usw.
(Funktionen ReadPosition(), ReadBinaryOutput())

Ende Schleife

Kommando "Ende der Aufzeichnung"

Zustand des Bewegungsobjekts auf MOTION_OBJECT_READY setzen

Kommando "Aufzeichnung abspeichern"

Fig. 6

Steuerung

| Roboterprogramm |

⇓

| Interpreter / Compiler |

⇓

| Kommando „MOVE <Bewegungsobjekt> |

⇓

| Interpolation in festem Takt |

I/O-System, Peripherie

Zugriffs-bibliothek

Programm-variablen

Positionsdaten, Vorsteuermomente

| Antriebssystem |

Treiber zur Verwaltung von Bewegungsobjekten

Bewegungsobjekt

Kartesische / achsspezifische Position in festem Takt (Soll / Ist-Werte)

| Systemzustände |

| Peripheriezustände |

| Externer Speicher, Netzwerk |

Fig.7

Initialisierung:
1. Systemzeit Tsys = 0 oder Tsys = Systemzeit bei letzter Unterbrechung
2. Setze aktuelle Position = Position Servosystem

Prüfung: Konsistenz aktuelle Position, ObjectPosData(Tsys), Werkzeugdaten usw. entsprechenden Daten des Bewegungsobjekts? → Nein → Abbruch

Ja

Lesen von Peripherie- und Systemzuständen aus ObjectSystemData(Tsys)

Setze beschreibbare Peripherie- und Systemzustände auf Wert entsprechend ObjectSystemData(Tsys)

Lesen von ObjectPosData(Tsys)

GegegebenfallsTransformation: ObjectPosData(Tsys) --> Achswinkel

Werden physikalische Grenzen eingehalten? → Nein (links) / → Nein (rechts)

Ja

Zu ObjectPosData(Tsys) zugehörige Achswinkel an ServoSystem schicken

Lesen von Peripherie- und Systemzuständen ObjectSystemData(Tsys) aus Bewegungsobjekt

Bewegungsstop, Abbruch

Setze beschreibbare Peripherie- und Systemzustände auf Wert entsprechend ObjectSystemData(Tsys)

Aktualisiere Tsys:
1. Vorwärtsbewegung: Tsys = Tsys + Ov * tIPO
2. Rückwärtsbewegung: Tsys = Tsys - Ov * tIPO
3. externes Zeitsignal: Tsys von externer Quelle lesen

Tsys > Max(Tsys) oder Abbruch-Signal erhalten?

Ja

Bewegungsstop/-ende

Fig.8

## EP 2 110 727 A2

**IN DER BESCHREIBUNG AUFGEFÜHRTE DOKUMENTE**

**In der Beschreibung aufgeführte Patentdokumente**

- DE 10125245